**Europäisches Patentamt**

**European Patent Office**

**Office européen des brevets**

(19)

(11) Numéro de publication : **0 472 447 A1**

(12) # DEMANDE DE BREVET EUROPEEN

(21) Numéro de dépôt : **91402087.0**

(22) Date de dépôt : **25.07.91**

(51) Int. Cl.⁵ : **G06F 7/52**

(30) Priorité : **27.07.90 FR 9009629**

(43) Date de publication de la demande :
**26.02.92 Bulletin 92/09**

(84) Etats contractants désignés :
**DE GB**

(71) Demandeur : **FRANCE TELECOM**
**6 place d'Alleray**
**F-75015 Paris (FR)**

(72) Inventeur : **Mou, Zhi-Jian**
**37 Bd Jourdan**
**F-75690 Paris Cédex 14 (FR)**
Inventeur : **Jutand, Francis**
**161, rue Etienne Dolet**
**F-94230 Cachan (FR)**

(74) Mandataire : **Fréchède, Michel et al**
**Cabinet Plasseraud 84, rue d'Amsterdam**
**F-75009 Paris (FR)**

(54) **Multiplieur cellulaire en arbre de type gradin inversé et son procédé de réalisation.**

(57) L'invention concerne un multiplieur cellulaire en arbre de type gradin inversé.

Le multiplieur d'ordre p et de hauteur n+1 est formé par une racine R constituée par un additionneur ARC et par un corps de multiplieur CO(p,n) d'ordre p et de hauteur n formé par un opérateur connecteur à cinq entrées C(n,q) de rang q, l'opérateur connecteur de rang 1 C(n,1) est connecté à la racine R, l'opérateur connecteur C(n,q) comportant un premier (1) et un deuxième (2) additionneur à retenue conservée -ARC- connectés en cascade. Le corps de multiplieur CO(p,n) comporte en outre un arbre A(p-1,n-2) d'ordre p-1 et de hauteur n-2 formé par un agencement d'additionneur ARC et connecté au premier additionneur ARC (1) et un corps de multiplieur CO(p,n-1) d'ordre p et de hauteur inférieure n-1 formé de manière analogue au corps de multiplieur CO(p,n) de hauteur supérieure n par récurrence, le corps de multiplieur CO(p,n-1) de hauteur inférieure étant connecté à l'opérateur connecteur C(n,q).

Application aux calculateurs et aux filtres numériques.

EP 0 472 447 A1

FIG.2a.

L'invention est relative à un multiplieur cellulaire en arbre de type gradin inversé.

L'architecture des multiplieurs rapides est particulièrement importante dans le domaine des systèmes numériques. Ces progrès dans le mode de calcul, en ce qui concerne l'architecture de ces multiplieurs, sont déterminants non seulement en ce qui concerne la seule architecture elle-même de ces derniers, mais aussi les accumulateurs de multiplieurs, les éléments internes d'ordinateurs, les filtres numériques et, d'une manière générale, tous les opérateurs mettant en oeuvre la sommation de multiples opérandes.

Initialement, les multiplieurs cellulaires en arbre ont fait l'objet d'études approfondies par C.S. Wallace, ces études ayant abouti à la mise en oeuvre de multiplieurs cellulaires rapides dits multiplieurs en arbre de Wallace.

De manière générale, ces multiplieurs sont divisés en trois parties : le codeur de Booth modifié, l'additionneur d'opérandes multiples, ou réducteur en produits partiels, et l'additionneur final. La caractéristique essentielle la plus remarquable de ce type de multiplieur apparaît au niveau de l'additionneur d'opérandes, les N opérandes étant sommés en deux nombres, cette opération étant désignée ci-après par sommation (N,2), au lieu d'un selon la pratique usuelle. L'additionneur d'opérandes multiples (N,2) est, à cet effet, constitué par un arrangement cellulaire en arbre d' additionneurs à retenue conservée (arbre de Wallace). Une telle structure de ce type d'additionneurs évite ainsi la propagation horizontale des retenues. Une telle architecture permet la mise en oeuvre très rapide de la sommation (N,2) dans un intervalle de temps proportionel à $\log_{3/2} N$. Pour une description plus complète de ce type d'additionneur, on pourra se reporter à l'article de C.S. Wallace "A suggestion for a fast multiplier" IEEE Transaction Electronic Computers, Vol. 13 p. 14-17 Fev. 1964).

Au plan théorique, C.S. Wallace, au cours de ses travaux, a ouvert la voie à l'obtention de la valeur limite la plus faible de temps de calcul nécessaire à la mise en oeuvre d'une sommation (N,2) lors de l'utilisation d'additionneurs à retenue conservée.

Cependant, la mise en oeuvre des structures en arbre de Wallace est rendue délicate et peu aisée, du fait de leur interconnexion complexe intriquée, en particulier lors de leur réalisation selon une topologie plane en très haute densité d'intégration (VLSI) dans laquelle une pluralité d'additionneurs à retenue conservée est superposée en un arrangement par strates.

Pour cette raison, la plupart des réalisateurs de circuits intégrés a ainsi préféré des structures de sommateurs (N,2) permettant une architecture régulière aux structures en arbre de Wallace, en acceptant cependant un compromis relativement au temps de calcul. Parmi ces architectures différentes, les plus représentatives, sont le réseau itératif d'additionneurs à retenue conservée, décrit par J.Y. Lee, H.L. Garvin et C.W. Slayman dans l'article intitulé "A high speed high density silicon 8x8 bit parallel multiplier" publié en Février 1987 dans la revue IEEE J. Solid-State Circuits, vol. SC-22, No 1, pp. 35-4O, les structures en arbre de Zuras-Mc Allister décrites dans l'article intitulé "Balanced delay trees and combinatorial division in VLSI", de D. Zuras, et W,H, Mc Allister publié dans la revue IEEE J. Solid State Circuits Vol. 21 p. 814-819 N° 5 en Octobre 1986, et enfin les structures en arbre dites 4-2 décrites par W. Li, J. Burr, M. Santoro et M. Horowitz, correspondant à la demande de brevet US O88O96 déposée le 21 Août 1987. Ces trois types de structures présentent respectivement un temps de calcul proportionnel à N, $N^{1/2}$ et log (N).

Le réseau itératif d'additionneurs à retenue conservée conduit à l'architecture la plus régulière et nécessite uniquement des interconnexions de couches voisines, mais présente l'inconvénient d'être le plus lent.

Les structures en arbre de Zuras-Mc Allister, arbre ZM, nécessitent la mise en oeuvre d'interconnexions inter-couches, du fait que la sortie d'un additionneur à retenue conservée n'est pas connectée à l'additionneur voisin mais aux autres additionneurs. Ceci a pour effet une accélération du processus de calcul, au prix toutefois d'une augmentation de la surface de silicium nécessaire à l'implantation d'une telle architecture. Il faut cependant souligner que les connexions inter-couches dans les arbres ZM sont d'exécution simple et peu onéreuse, deux conducteurs de connexion inter-couches étant seuls nécessaires. Le nombre de conducteurs inter-couche est en outre défini comme une mesure de la transparence entre couches d'additionneurs à retenue conservée, les structures en arbre de transparence constante pouvant conduire à une topographie très compacte. Mais, les arbres ZM s'écartent très rapidement de la limite inférieure de Wallace, lorsque le nombre d'opérandes N augmente.

En outre, la catégorie des arbres de type 4-2 apparaît particulièrement adaptée à la mise en oeuvre de sommations $(2^m,2)$, lesquelles sont très courantes dans beaucoup d'applications. Ce type d'arbre peut conduire à un temps de calcul proportionnel à log N égal ou voisin de la limite inférieure de Wallace. Cependant, 2(m-2) conducteurs inter-couches sont nécessaires, ce qui a pour effet une croissance rapide de la surface de silicium.

Plus récemment, un multiplieur cellulaire à structure en arbre dit en racine p[ième] a été décrit dans la demande de brevet français n° 88 O27O1. Cette structure est formée par des additionneurs à retenue conservée interconnectés par des connecteurs à quatre entrées. Bien que s'approchant de la limite inférieure de Wallace pour les faibles valeurs du nombre d'opérandes N, le temps de calcul n'est plus optimum pour les valeurs de nombre d'opérandes importantes.

La présente invention a pour objet de remédier aux inconvénients précités par la mise en oeuvre d'un muliplieur cellulaire en arbre permettant d'atteindre ou approcher, pour les valeurs de nombre d'opérandes importantes, la limite inférieure de Wallace, le temps de calcul du multiplieur cellulaire en arbre objet de l'invention étant sensiblement optimisé.

Un autre objet de la présente invention est la mise en oeuvre d'un multiplieur cellulaire en arbre, permettant de modifier le nombre d'interconnexions inter-couches en comparaison du nombre d'interconnexions inter-couches des multiplieurs cellulaires en arbre ZM, afin d'augmenter cependant la vitesse de traitement.

Le multiplieur cellulaire en arbre de type gradin inversé, objet de la présente invention, comporte une pluralité d'additionneurs à retenue conservée interconnectés. Il est remarquable en ce que pour constituer un multiplieur d'ordre p et de hauteur n+1, celui-ci est formé par une racine constituée par un additionneur à retenue conservée et par un corps de multiplieur d'ordre p et de hauteur n, où p désigne un paramètre de temps de traitement de sommation de la forme $N^1/(p+1)$, N désignant le nombre d'opérandes à traiter. Le corps de multiplieur est formé d'une part, par un opérateur connecteur à cinq entrées de rang q noté C(n,q). L'opérateur connecteur de rang 1, C(n,1), est interconnecté à la racine. L'opérateur connecteur de rang q, C(n,q) comporte un premier et un deuxième additionneurs à retenue conservée connectésen cascade. Le premier et le deuxième additionneurs à retenue conservée comportent chacun trois entrées, une sortie somme et une sortie retenue,la sortie retenue du premier additionneur est connectée à une entrée du deuxième additionneur. L'opérateur connecteur C(n,q) comporte trois sorties constituées par la sortie somme du premier additionneur, la sortie somme et la sortie retenue du deuxième additionneur.

Le corps de multiplieur est d'autre part formé par un arbre d'ordre p-1 et de hauteur n-2 constitué par un agencement d'additionneurs à retenue conservée interconnectés, les sorties somme et retenue de l'additionneur à retenue conservée constituant racine de cet arbre, étant respectivement connectées à une entrée du premier additionneur de l'opérateur connecteur de rang q et par un corps de multiplieur d'ordre p et de hauteur inférieure n-1, ce corps de multiplieur étant formé de manière analogue au corps de multiplieur de hauteur supérieure n, et connecté à l'opérateur connecteur C(n, q).

Le multiplieur cellulaire en arbre, objet de la présente invention, trouve application à tout système de calcul numérique, tels que calculateurs utilisant des multiplieurs itératifs rapides ou des multiplieurs à structure dite "pipe-line".

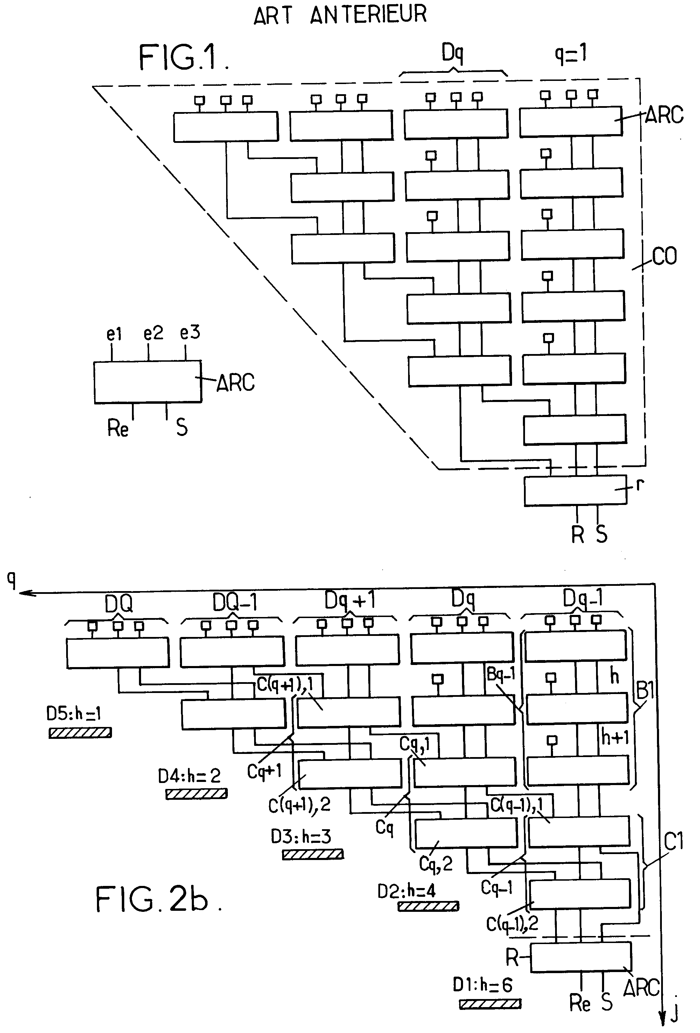

Le multiplieur cellulaire en arbre selon l'invention, sera décrit plus en détail dans la description ci-après et dans les dessins dans lesquels outre la figure 1, relative à une structure de Zuras Mc Allister dite structure en arbre ZM de l'art antérieur,

    – la figure 2a représente un multiplicateur cellulaire en arbre conforme à l'objet de la présente invention,

    – la figure 2b représente un mode de réalisation particulier avantageux non limitatif du multiplieur objet de l'invention, représenté en figure 2a,

    – la figure 2c représente un détail de réalisation d'éléments constitutifs du multiplieur cellulaire tel que représenté en figure 2b,

    – la figure 3a représente un mode de réalisation avantageux d'une topologie du multiplieur cellulaire selon l'invention en vue de son intégration sur une puce de circuit intégrée,

    – les figures 3b et 3c représentent des détails de réalisation de la figure 3a,

    – la figure 4a représente un multiplieur cellulaire en arbre conforme à l'objet de la présente invention de hauteur sept, permettant d'assurer une sommation S(24,2) sur vingt-quatre opérandes,

    – la figure 4b représente un multiplieur cellulaire en arbre d'ordre 2 conforme à l'objet de la présente invention de hauteur sept, permettant d'assurer une sommation S(28,2) sur vingt- huit opérandes,

    – la figure 5a représente un schéma bloc d'un multiplieur cellulaire en arbre d'ordre p et de hauteur n, conformément à l'objet de la présente invention,

    – la figure 5b représente un schéma bloc d'un multiplieur cellulaire en arbre de type hybride de hauteur n, incorporant dans le corps hybride de multiplieur une structure en arbre ZM et une structure en arbre de type gradin inversé d'ordre p, et en dehors du corps hybride de multiplieur, un multiplieur en arbre hybride de type gradin inversé et en arbre ZM,

    – la figure 6a représente un diagramme comparatif des différentes structures en arbre possibles relativement au nombre N d'opérandes susceptibles d'être traités en fonction de la hauteur n du multiplieur, vis-à-vis de la limite inférieure de Wallace,

    – la figure 6b donne une table de valeurs correspondantes du diagramme de la figure 6a.

Préalablement à la description proprement dite du multiplieur cellulaire en arbre objet de la présente invention, quelques définitions seront rappelées en liaison avec la figure 1 relative à l'art antérieur relativement aux structures en arbre réalisées à partir de circuits ou éléments tels que des additionneurs à retenue conservée, désignés ci-après par additionneurs ARC.

Sur la figure 1, en partie gauche de celle-ci, on a représenté de manière schématique un additionneur à retenue conservée ARC lequel comporte trois entrées e1 e2 et e3, recevant les opérandes à traiter, une sortie retenue notée Re et une sortie somme notée S. Ces éléments de circuit sont connus sous le vocable anglo-saxon de "carry save adder". En outre, une structure en arbre comportant de tels additionneurs, tels que représentés en figure 1, comporte habituellement une racine notée r généralement constituée par un additionneur précité, et un corps de multiplieur noté CO comportant un agencement particulier d'une pluralité de ces additionneurs ARC.

On désigne par degrés, notés Dq, l'agencement dans le corps de multiplieur d'une pluralité d'additionneurs ARC en cascade, un arrangement en cascade correspondant d'une part en la liaison d'une sortie retenue Re ou somme S à la même entrée de l'additionneur ARC successif suivant, dans le sens de traitement des opérandes ou des résultats de ces traitements, et d'autre part à un niveau commun d'intégration dans des circuits intégrés à plusieurs niveaux d'intégration ainsi qu'il sera décrit ultérieurement dans la description. On notera en outre que l'indice q définit ainsi le rang d'un degré ou d'élément constitutif de ce degré dans la topologie du circuit intégré correspondant et dans la représentation de cette topologie ainsi que représentée en figure 1, le rang 1, q=1, étant, par convention purement arbitraire, attribué par exemple au degré correspondant comportant la racine r par exemple.

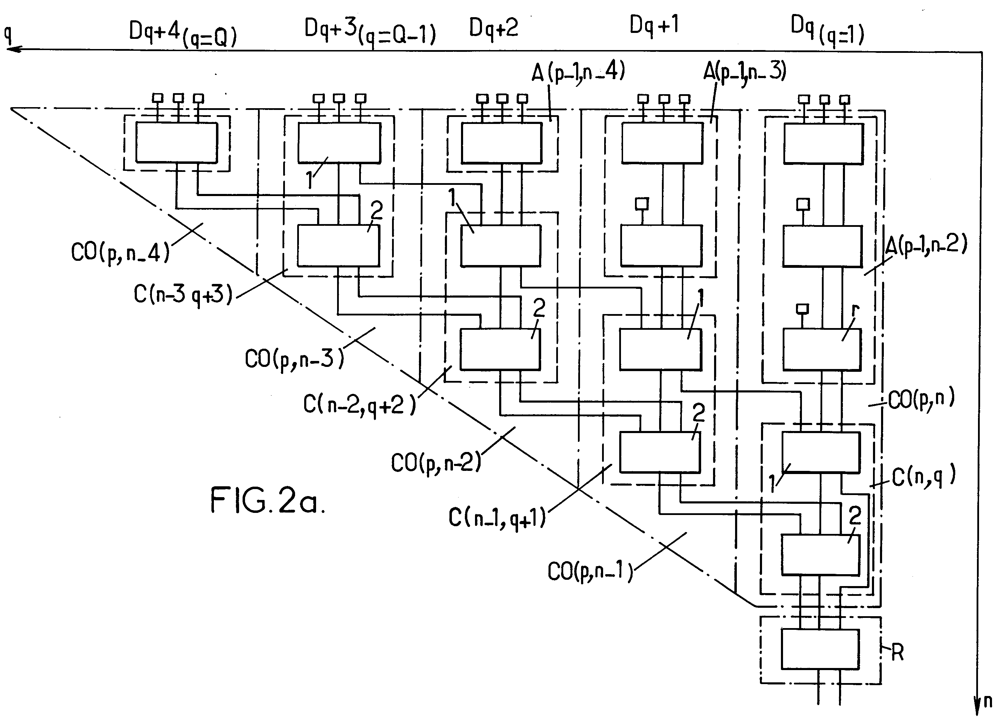

Le multiplieur cellulaire en arbre de type gradin inversé objet de la présente invention sera maintenant tout d'abord décrit en liaison avec la figure 2a.

Bien entendu, le multiplieur objet de l'invention comporte une pluralité d'additionneurs ARC interconnectés.

Ainsi qu'on l'a représenté sur la figure 2a, pour constituer un multiplieur d'ordre p et de hauteur n+1, la hauteur définissant le chemin critique suivi par les opérandes à traiter pour obtenir le résultat de traitement, cette hauteur correspondant au nombre maximum d'additionneurs ARC que chaque opérande doit traverser pour ainsi contribuer au résultat du traitement, ce multiplieur est formé par une racine notée R constituée par un additionneur ARC. Le multiplieur cellulaire en arbre objet de l'invention est également formé par un corps de multiplieur noté CO(p,n) d'ordre p et de hauteur n. L'indice p désigne un paramètre de temps de traitement de sommation de la forme $N^{1/p}$ où N désigne le nombre d'opérandes à traiter, p étant désigné comme l'ordre de la structure en arbre correspondante. L'indice n désigne la hauteur du corps de multiplieur.

Ainsi qu'il apparaîtra à l'observation de la figure 2a, le corps de multiplieur CO(p,n) est formé par un opérateur connecteur à cinq entrées, cet opérateur connecteur étant noté C(n,q), l'opérateur connecteur de rang 1 noté C(n,1) étant interconnecté à la racine R. On comprendra bien sûr que l'opérateur connecteur de rang 1 C(n,1) est implanté dans le degré de rang 1 où q=1.

Ainsi qu'on l'a représenté d'ailleurs en figure 2a, l'opérateur connecteur C(n,q) comporte un premier et un deuxième additionneur à retenue conservée ARC notés respectivement 1 et 2 connectés en cascade. Le premier et le deuxième additionneur ARC 1 et 2 comportent chacun trois entrées, une sortie somme et une sortie retenue, et la sortie retenue du premier additionneur ARC 1 est connectée à une entrée du deuxième additionneur ARC 2. L'opérateur connecteur C(n,q) comporte ainsi trois sorties constituées par la sortie somme du premier additionneur ARC 1 et par la sortie somme et la sortie retenue du deuxième additionneur ARC 2.

Ainsi qu'on l'a représenté en figure 2a, les trois sorties de l'opérateur connecteur C(n,q) pour q=1, soit l'opérateur connecteur C(n,1), sont ainsi reliées respectivement à une entrée de la racine R.

Ainsi qu'on l'a en outre représenté en figure 2a, le corps de multiplieur CO(p,n) comporte également un arbre d'ordre p-1 et de hauteur n-2, cet arbre étant noté A(p-1,n-2). De manière générale, cet arbre peut être constitué par un agencement d'additionneurs ARC interconnectés. Bien entendu, les sorties somme et retenue de l'additionneur ARC, constituant racine r de l'arbre précité A(p-1,n-2), sont respectivement interconnectées à une entrée du premier additionneur ARC 1 de l'opérateur connecteur C(n,q) en particulier de l'opérateur connecteur C(n,1).

Sur la figure 2a on a représenté l'arbre précité A(p-1,n-2) par un nombre d'additionneurs ARC limité à trois, afin de ne pas surcharger le dessin. Il est bien entendu que l'arbre A(p-1,n-2) peut en fait être constitué par tout type d'arbre d'ordre p-1 et de hauteur n-2 pour constituer un degré Dq correspondant, en particulier un degré D1 de rang 1 et de hauteur n+1 comportant l'arbre précité, l'opérateur connecteur C(n,q), avec q=1, et la racine R. Différents exemples de réalisation mettant en oeuvre les arbres de nature différente pour constituer l'arbre A(p-1,n-2) seront donnés ultérieurement dans la description.

En outre, ainsi qu'on l'a également représenté en figure 2a, le corps de multiplieur CO(p,n) d'ordre p et de hauteur n comporte également un corps de multiplieur d'ordre p et de hauteur inférieure n-1, ce corps de multiplieur étant noté CO(p,n-1). Bien entendu, le corps de multiplieur de hauteur inférieure n-1 est formé de manière semblable au corps de multiplieur de hauteur supérieure n précédemment décrit, et ce de manière récursive.

De l'observation de la figure 2a, on comprendra bien entendu que chaque corps de multiplieur noté CO(p,n) est ainsi formé d'un arbre noté A(p-1,n-2) et d'un corps de multiplieur de hauteur inférieure noté CO(p,n-1), l'arbre et le corps de hauteur inférieure précités étant interconnectés par l'intermédiaire d'un connecteur noté C(n,q) pour constituer le corps de multiplieur de hauteur supérieure noté CO(p,n).

La loi de récurrence de formation du corps de multiplieur objet de la présente invention, peut alors être établie de la façon ci-après :

$$CO(p,n) = CO(p,n-1) + A(p-1,n-2).$$

L'on comprendra bien sûr que le symbole + de la relation précitée représente la liaison de l'arbre $A(p-1,n-2)$, et du corps de multiplieur $CO(p,n-1)$ par l'intermédiaire du connecteur de rang considéré $C(n,q)$.

Sur la figure 2a la loi de récurrence précitée de la structure en arbre du multiplieur, objet de l'invention, est représentée par la subdivision de cette structure d'une part en traits pointillés au niveau de chaque degré de rang q, et d'autre part au niveau des traits mixtes verticaux, lesquels représentent chacun des corps CO d'ordre p et de hauteur différente n à n-(q-1).

Ainsi qu'il résulte d'ailleurs de la figure 2a, le corps de multiplieur d'ordre p et de hauteur infrieure n-1 noté $CO(p,n-1)$ comporte bien entendu un opérateur connecteur à cinq entrées noté $C(n-1,q+1)$ de rang supérieur q+1 et les trois sorties de l'opérateur connecteur précitées sont connectées respectivement à une entrée du premier et du deuxième additionneur ARC 1,2 constituant l'opérateur connecteur de rang inférieur $C(n,q)$. Bien entendu, le corps de multiplieur $CO(p,n-1)$ de hauteur inférieure n-1 comporte également un arbre noté $A(p-1,n-3)$ d'ordre inférieur p-1 et hauteur inférieure n-3, ainsi qu'un corps de multiplieur de même ordre p et de hauteur inférieure n-2, ce corps étant noté $CO(p,n-2)$. Il en est de même pour les corps de multiplieurs successifs formés par les degrés d'ordre supérieur.

En ce qui concerne les conditions aux limites de la structure telle que représentée en figure 2a, on notera en ce qui concerne le degré de rang 1, c'est-à-dire pour q=1, que la hauteur n-2 de l'arbre $A(p-1,n-2)$ définit le nombre de degrés de rang supérieur, ce nombre de degrés étant par exemple égal à Q avec Q=n-1.

On notera bien sûr que la hauteur de chaque arbre $A(p-1,n-(q+1))$ étant décroissante en fonction du rang q de chaque degré, les arbres des degrés q=Q et q=Q-1 sont sensiblement réduits, ces degrés étant alors respectivement constitués par :

– un additionneur ARC pour le degré d'ordre q=Q et par

– un connecteur à cinq entrées pour le degré de rang q=Q-1, l'additionneur ARC constituant le degré de rang q=Q présentant respectivement sa sortie somme S et retenue Re respectivement connectées à une entrée de l'additionneur ARC 2 constitutif du connecteur formant le degré de rang inférieur q=Q-1.

Une description plus détaillée d'un mode de rélisation particulier du multiplieur cellulaire en arbre de type gradin inversé, objet de la présente invention, sera maintenant donnée en liaison avec la figure 2b, dans le cas où chaque arbre d'ordre p-1 et de hauteur décroissante, noté $A(p-1,n-(q+1))$, est constitutif d'un corps de multiplieur $CO(p,n-(q-1))$ dans les conditions précédemment décrites, chaque arbre étant constitué par une pluralité d'additionneurs ARC en cascade.

Conformément à la figure 2b, et afin d'alléger la notation, les différents opérateurs connecteurs utilisés seront notés avec un seul indice les caractérisant, l'indice de rang, étant entendu que l'indice de hauteur pour ces opérateurs connecteurs n'est représentatif que de la hauteur du degré correspondant et pas de l'opérateur connecteur lui-même.

Ainsi, sur la figure 2b, pour un degré Dq, la notation simplifiée de l'opérateur connecteur correspondant est : Cq. Bien entendu, cet opérateur connecteur comporte à l'identique un premier et un deuxième additionneur ARC notés 1 respectivement 2. Sur la figure 2b, le degré courant, noté Dq, est par exemple le degré de rang immédiatement supérieur au rang du degré comportant la racine R, noté Dq-1.

Sur la figure 2b on pourra remarquer que les additionneurs ARC sont agencés en degrés de hauteur n et de rang q. Chaque degré Dq est formé pour q<Q-2 par une branche notée Bq constituée par une pluralité de n-2 additionneurs successifs.

Ainsi qu'on pourra le constater à l'observation de la figure 2b, un opérateur connecteur Cq à cinq entrées, formé ainsi que précédemment décrit au moyen de deux additionneurs ARC, est interconnecté d'une part à la branche Bq pour former le degré Dq de hauteur n, n représentant en fait le nombre d'additionneurs de ce degré et d'autre part à l'opérateur connecteur Cq+1 de rang supérieur, de façon à former pour le sous-ensemble constitué par les Q-q degrés de rang supérieur, un corps de multiplieur cellulaire en arbre de structure arborescente correspondante ainsi que décrit précédemment dans la description en liaison avec la figure 2a.

Bien entendu, les degrés de rang Q-1 et Q sont respectivement constitués par un connecteur à cinq entrées et par un additionneur ARC.

La racine R est elle-même formée par un additionneur de sortie constitué par un additionneur ARC. L'opérateur connecteur C1 est interconnecté à l'additionneur ARC formant la racine R.

Ainsi, chaque branche Bq de rang q comporte n-2 additionneurs successifs et comprend n entrées d'opérandes disponibles, ce qui permet d'assurer le traitement d'un nombre important d'opérandes ainsi qu'il sera décrit ultérieurement dans la description.

Dans le mode de réalisation de la figure 2b, pour constituer une branche Bq de rang q, les sorties de somme et de retenue d'un aditionneur ARC noté h sont reliées aux entrées correspondantes de l'additionneur ARC h+1 successives suivant, les notations h et h+1 correspondant au sens de traitement des opérandes.

Une description plus détaillée de l'interconnexion entre les éléments additionneurs ARC d'un degré Dq de rang q aux éléments correspondants additionneus ARC des degrés adjacents Dq-1 de rang q-1 et Dq+1 de rang q+1 sera donnée également en liaison avec la figure 2b.

Selon la figure précitée, chaque opérateur connecteur Cq d'ordre q pour 1<q<Q-2 est tel que les trois entrées d'opérandes du premier additionneur ARC 1 de l'opérateur connecteur Cq, additionneur noté Cq,1 sont respectivement reliées à la sortie somme, à la sortie retenue du dernier additionneur constituant la branche Bq correspondante et à la sortie somme du premier additionneur ARC notée C(q+1),1 de l'opérateur connecteur de rang supérieur q+1, opérateur connecteur noté C(q+1).

En outre, la sortie retenue et la sortie somme du premier additionneur ARC sont respectivement reliées à une entrée opérande du deuxième additionneur et à une entrée opérande du premier additionneur ARC de l'opérateur connecteur C(q-1) de rang inférieur q-1, ce premier additionneur ARC étant noté C(q-1),1.

Enfin, deux entrées opérandes du deuxième additionneur du connecteur Cq, deuxième additionneur ARC noté Cq,2 sont respectivement reliées à la sortie somme et à la sortie retenue du deuxième additionneur noté C(q+1),2 de l'opérateur connecteur C(q+1) de rang supérieur q+1.

L'interconnexion précitée entre connecteurs des degrés de rang q-1, q et q+1 est valable quel que soit le type d'arbre utilisé pour former ces degrés, en particulier dans le cas où les arbres précités sont constitués par des branches ainsi que représentés en figure 2b et décrits précédemment.

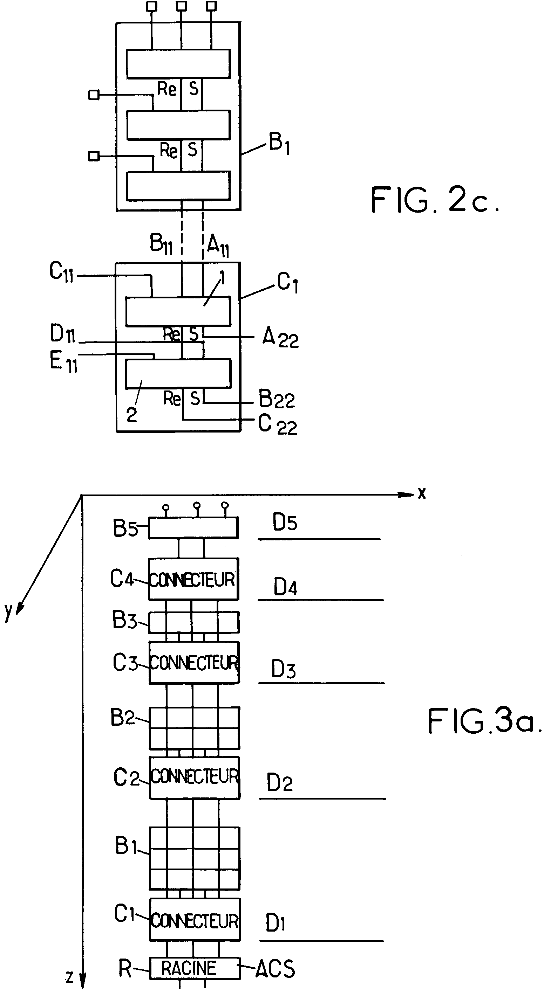

Sur la figure 2c on a représenté de façon plus détaillée la constitution d'un opérateur connecteur tel que l'opérateur connecteur C1 par exemple, et celle d'une branche la branche B1 de la figure 2b. On notera en particulier à l'observation de la figure précitée, que les cinq entrées de l'opérateur connecteur considéré sont formées par les entrées A11 B11 C11 du premier additionneur ARC 1 et par deux entrées D11 E11 du deuxième additionneur ARC 2. Les trois sorties de l'opérateur connecteur C1 notées A22 B22 C22 sont respectivement formées par la sortie somme du premier additionneur ARC et par la sortie somme et la sortie retenue du deuxième additionneur ARC 2.

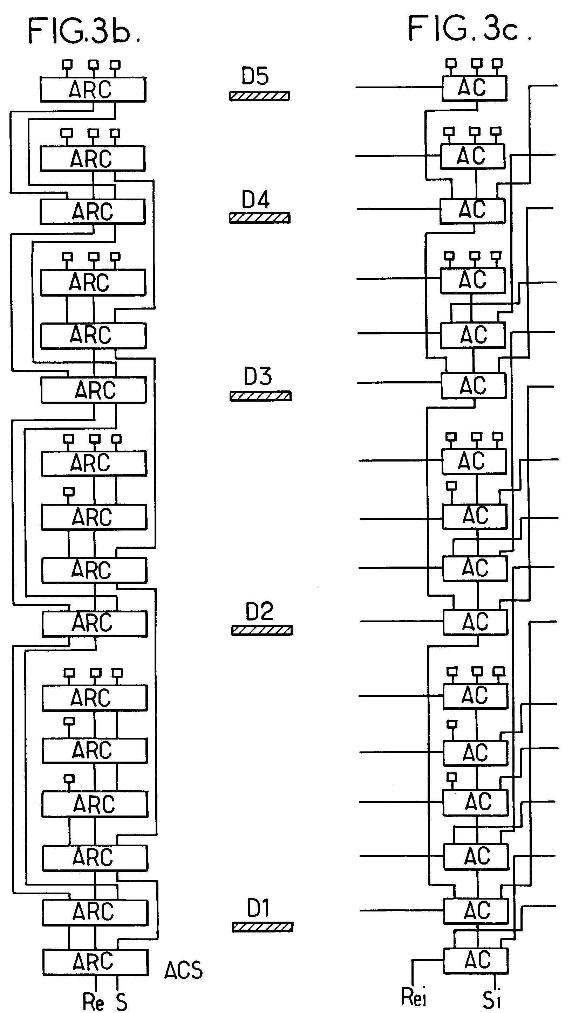

Une description plus détaillée d'une topologie préférentielle de mise en oeuvre du multiplieur cellulaire en arbre de type gradin inversé objet de la présente invention, tel que représenté en figure 2a ou 2b, sous forme de circuit intégré, sera maintenant donnée en liaison avec les figures 3a, 3b, 3c.

D'une manière générale, un additionneur ARC est un opérateur d'additions au niveau mot, chaque mot étant constitué de s bits. Ainsi, un additionneur ARC additionne trois opérandes constitués chacun par un mot et délivre deux sorties. Chaque additionneur ARC est composé de plusieurs additionneurs complets notés AC, où "full adder" en langage anglo-saxon dont le nombre est déterminé par la largeur des mots constituant les opérandes précités. Ainsi un additionneur complet est un opérateur d'addition au niveau bits, lequel additionne ainsi trois bits de même poids de trois opérandes différents et délivre en sortie deux bits de poids différent, ces bits correspondant respectivement à un bit somme S et un bit retenue Re.

Conformément à un aspect particulièrement avantageux du multiplieur objet de la présente invention, les additionneurs ARC, ainsi que représentés en figure 3a et en particulier les arbres et les connecteurs constituant les degrés D1 à D5 de rang 1 à 5, sont disposés selon une topologie plane et verticale. En effet, les degrés D5 constitué par la branche B5, D4 constitué par l'opérateur connecteur C4, D3 constitué par l'opérateur connecteur C3 et la branche B3, D2 constitué par l'opérateur connecteur C2 et la branche B2 et D1 constitué par l'opérateur connecteur C1 et la branche B1, ainsi que la racine R constituant l'élément de sortie ACS, sont surperposés selon la dimension verticale du bloc de silicium, la direction Z sur la figure 3a. Les degrés successifs D5 à D1 peuvent alors être organisés en couches successives d'intégration.

Ainsi qu'on l'a en outre représenté en figure 3a, l'une des dimensions de la surface du circuit intégré, la dimension X par exemple, peut alors correspondre à la dimension d'alignement des bits de même poids des mots constituant chaque opérande, alors que la dimension Y au contraire peut correspondre à l'alignement des bits des différents poids constitutifs des mots précités.

Le mode de réalisation sous forme de circuit intégré tel que représenté en figure 3a du multiplieur objet de la présente invention apparaît ainsi particulièrement avantageux dans la mesure où la complexité de la structure correspondante se développe finalement sur une seule dimension de la puce de circuit intégré, la dimension Z, l'implantation du multiplieur objet de la présente invention étant de ce fait essentiellement monodimensionnelle. En outre, on constatera que les fils de liaison inter-couches appelés TLW en référence à leur désignation de "translayer wires" en language anglo-saxon sont au plus au nombre de trois entre deux couches successives, ce qui permet d'obtenir un facteur de transparence constant.

Sur les figures 3b et 3c on a représenté respectivement une vue de la structure représentée en figure 3a respectivement relativement en ce qui concerne les additionneurs ARC opérant au niveau mots, puis relativement aux additionneurs complets opérant au niveau bits. Les structures précitées sont bien entendu semblables à celles de la figure 3a puisque, en fait, l'on passe de la structure telle que représentée en figure 3c à celle de la figure 3b par duplication de la précédente selon l'axe des X, le passage de la structure de la figure 3b à celui de la figure 3a étant alors obtenu par duplication de cette figure selon la dimension Y.

On notera en particulier que la structure du multiplieur cellulaire en arbre objet de la présente invention permet la modification du nombre de fils de connection inter-couches d'une unité par rapport à des structures de l'art antérieur telles que représentées en figure 1, ce qui bien entendu permet, bien qu'en augmentant la perte de superficie utilisable effectivement pour assurer l'intégration dans la dimension X,Y de surface du circuit intégré, d'augmenter la rapidité du traitement.

On notera en particulier que les multiplieurs cellulaires en arbre de type gradin inversé objet de la présente invention permettent de réaliser un traitement d'opérandes de type sommation S (N,2) avec un temps de traitement plus proche de la limite inférieure de Wallace que ne le permettent les structures en arbre ZM par exemple, lesquelles n'autorisent qu'un temps de traitement proportionnel à $N^{1/2}$, ainsi qu'il sera décrit ultérieurement dans la description.

Ainsi qu'on pourra le remarquer à l'observation de la figure 2a ou 2b, le multiplieur cellulaire en arbre de type gradin inversé, tel que représenté sur ces figures, peut constituer avantageusement un multiplieur cellulaire en arbre réalisant une sommation de type S (18,2). Les degrés du gradin inversé comportent respectivement pour les degrés D1 à D5 5,4,3,2,1 additionneurs ARC. Le multiplieur cellulaire en arbre tel que représenté sur les figures précitées présente une hauteur de 6 additionneurs ARC, laquelle est identique à celle d'un arbre de Wallace idéal permettant d'assurer une sommation de type S (18,2). On notera au contraire qu'un arbre de type ZM permettant d'assurer une sommation S (18,2) nécessite une hauteur de 7 additionneurs ARC, ce qui montre que le multiplieur cellulaire en arbre de type gradin inversé, objet de la présente invention, permettant d'assurer une sommation S (18,2), est plus proche de la limite inférieure de Wallace que ne l'est l'arbre ZM équivalent. Ceci est encore vrai pour les valeurs supérieures du nombre d'opérandes N ainsi qu'il sera décrit ultérieurement dans la description.

En ce qui concerne la structure générale des multiplieurs cellulaires en arbre objet de la présente invention, on notera qu'un corps de multiplieur CO tel que représenté en figure 2a, de hauteur n, est composé de n-1 degrés, un degré de hauteur 1 étant constitué par un additionneur ARC tel que le degré de rang Q sur les figures 2a ou 2b et un d'un degré de hauteur 2 étant composé d'un opérateur connecteur tels que les degrés de rang Q-1 sur ces mêmes figures. Le corps de multiplieur lui-même est alors de hauteur n-1 et un corps de multiplieur de hauteur n peut alors être construit à partir d'un corps de hauteur n-1 auquel est associé un degré de hauteur n, ce degré étant constitué par un arbre de hauteur n-2 plus un opérateur connecteur ainsi que décrit précédemment en liaison avec la figure 2a ou 2b.

Il est alors possible de déterminer pour un arbre de type gradin inversé de hauteur n, le nombre d'opérandes N en fonction de la hauteur du multiplieur :

N(n)=N(n-1)+n-1 avec la condition initiale N(1)=3.

Le nombre d'additionneurs ARC nécessaire à la mise en oeuvre d'un multiplieur en arbre de type gradin inversé objet de la présente invention peut alors être défini par la relation :

$N_{ARC}(n)=N_{ARC}(n-1)+n-1$ avec la condition initiale $N_{ARC}(1)=1$.

On démontre alors que le nombre N d'opérandes succeptible d'être traité par un multiplieur cellulaire de type gradin inversé objet de la présente invention de hauteur n est alors donné à partir des relations précédentes selon la nouvelle relation :

$$N = \frac{n^2}{2} - \frac{n}{2} + 3$$

A titre d'exemple on notera qu'un multiplieur cellulaire en arbre de type gradin inversé objet de la présente invention est susceptible de permettre le traitement d'au plus 24 opérandes pour un multiplieur cellulaire en arbre de hauteur 7, alors qu'un multiplieur cellulaire de type gradin inversé selon l'invention de hauteur 8 peut permettre le traitement d'au plus 31 oprandes.

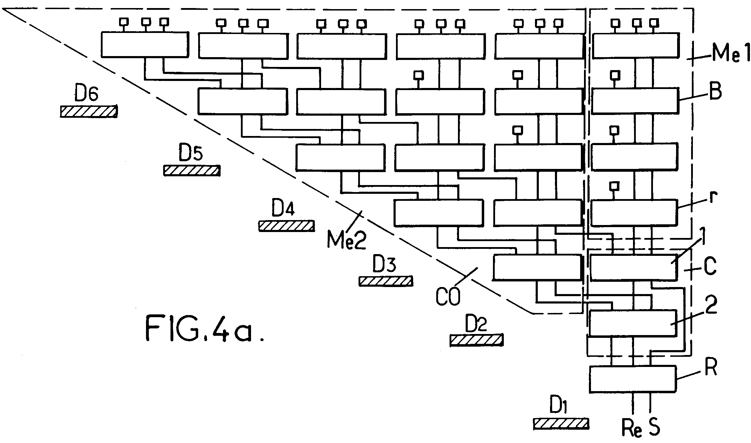

Une variante de réalisation d'un multiplieur cellulaire en arbre de type gradin inversé objet de la présente invention, de hauteur n=7 et d'ordre 1 à 24 opérandes est représentée en figure 4a.

Il comporte un premier degré D1 formé d'une part par un opérateur connecteur C dont les trois sorties sont reliées à la racine R et d'autre part, un arbre formant branche B constitué par quatre additionneurs ARC en cascade. L'additionneur ARC formant racine de l'arbre, additionneur noté r, est connecté aux trois bornes d'entrée du premier additionneur ARC constitutif de l'opérateur connecteur C.

Le multiplieur cellulaire en arbre tel que représenté sur cette figure comporte également un corps de multiplieur noté CO formant multiplieur élémentaire Me2 de type gradin inversé formé par cinq degrés successifs notés D2 à D6. L'opérateur connecteur C2 du degré D2 est interconnecté aux deux entrées du deuxième additionneur ARC constitutif de l'opérateur connecteur C.

La structure en arbre constituant le multiplieur cellulaire de type gradin inversé objet de la présente invention, telle que décrite successivement en référence aux figures précédentes, apparaît particulièrement avantageuse puisque celle-ci peut permettre la mise en oeuvre de configurations de multiplieurs cellulaires correspondants, tout à fait différentes et adaptatives en fonction du nombre N d'opérandes à traiter. En particulier, ainsi qu'il sera décrit ultérieurement dans la description, on notera que la structure des multiplieurs cellulaires en arbre objet de la présente invention peut être adaptée en vue de rendre optimales ces structures, en fonction du nombre d'opérandes traités par comparaison à la limite inférieure de Wallace ainsi qu'il sera décrit ultérieurement dans la description.

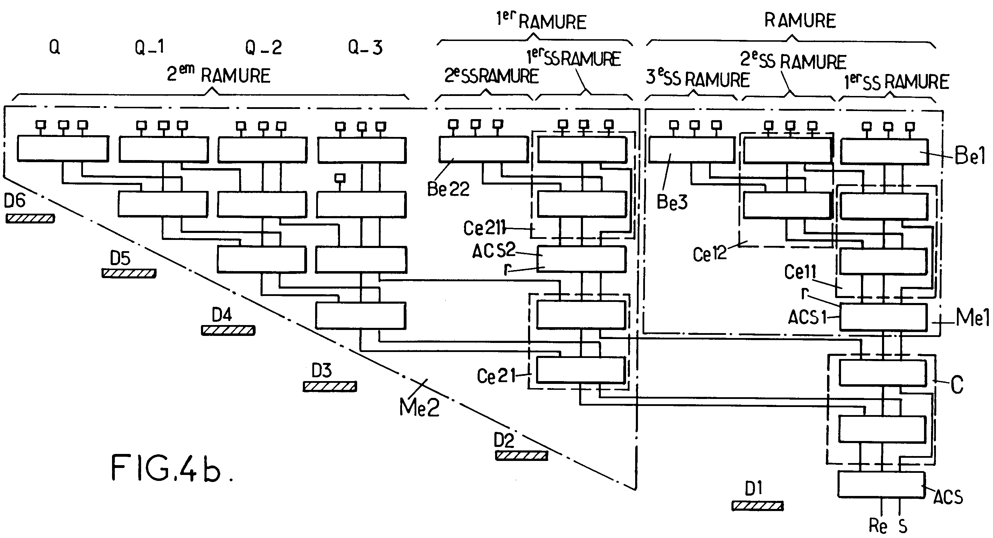

En effet, il est possible, ainsi que représenté en figure 4b, de réaliser un multiplieur cellulaire en arbre de type gradin inversé de hauteur identique n=7 à celui de la figure 4a, mais pour un nombre d'opérandes plus important, N étant égal à 28. Ainsi qu'on pourra le constater à l'observation de la figure 4b, le nombre d'entrées d'opérandes au niveau du degré de rang 2 D2 peut être augmenté de 5 à 6, alors que le nombre d'entrées d'opérandes au niveau du degré de rang 1 D1 peut être augmenté de 6 à 9.

Dans les modes de réalisation des figures 4a et 4b on notera que l'ordre p est supérieur à 1, le temps de traitement des arbres de type gradin inversé représenté sur les figures précitées étant proportionnel respectivement à $N^{1/2}$ et $N^{1/3}$.

Dans le mode de réalisation tel que représenté en figure 4b, les degrés de rang 1 et 2 du mode de réalisation de la figure 4a ont été remplacés par un premier multiplieur cellulaire élémentaire noté Me1 de hauteur n-3 et d'ordre p-1, les degrés de rang q>3 étant arrangés de façon à constituer un deuxième multiplieur cellulaire élémentaire Me2 de hauteur n-2 et d'ordre p. Les premier et deuxième multiplieurs élémentaires Me1 et Me2 sont interconnectés à un connecteur C.

Ainsi qu'on l'a en outre représenté en figure 4b, le premier degré D1 est alors formé d'une part par l'opérateur connecteur C dont les trois sorties sont reliées à la racine R, et d'autre part par un arbre de type gradin inversé. Ainsi que représenté sur la figure précitée, cet arbre comprend un opérateur connecteur Ce11 et un additionneur de sortie noté ACS1, lequel constitue la racine r de l'arbre précité. On comprendra bien entendu que l'arbre précité constitue en fait une ramure pour l'arbre général, cette ramure comprenant une première sous-ramure formée par une branche Be1 connectée à l'opérateur connecteur Ce11 et une deuxième sous-ramure formée par un opérateur connecteur noté Ce12, lequel est connecté à l'opérateur connecteur Ce11 constituant la ramure. L'arbre constituant la ramure de l'arbre général précité comporte également une troisième sous-ramure formée par une branche notée Be3, laquelle est formée par un additionneur ARC, cette branche étant connectée à l'opérateur connecteur Ce12 de la deuxième sous-ramure.

De la même manière, le multiplieur élémentaire Me2 constitue en fait un corps de multiplieur de manière analogue au corps CO du mode de réalisation de la figure 4a.

Le multiplieur élémentaire Me2, ainsi que représenté en figure 4b, comporte un opérateur connecteur noté Ce21 auquel est connecté d'une part un arbre tel que défini précédemment, constituant première ramure, et un corps de multiplieur de hauteur inférieure constituant deuxième ramure. Ainsi qu'on l'a représenté sur la figure précitée, la première ramure du multiplieur élémentaire Me2 comprend une première et une deuxième sous-ramure. La première sous-ramure est formée par un opérateur connecteur noté Ce211 et par un additionneur de sortie noté ACS2 formant racine r pour la première ramure. L'additionneur de sortie ACS2 formant racine r est connecté d'une part à l'opérateur connecteur Ce21 du deuxième multiplieur élémentaire Me2, et à l'opérateur connecteur Ce211 de la première sous-ramure. La deuxième sous-ramure de la première ramure formée par une branche notée Be22 est formée par un unique additionneur ARC connecté à l'opérateur connecteur Ce211 de la première sous-ramure.

La deuxième ramure du multiplieur élémentaire Me2 est alors formée par une structure d'arbre en gradin de type inversé telle que représentée précédemment en figure 2a, 2b ou 4a, cette structure étant formée par quatre degrés de rang Q, Q-1, Q-2 et Q-3. La structure en arbre du multiplieur cellulaire de type gradin inversé telle que représentée en figure 4b peut alors être qualifiée de structure en arbre de type gradin inversé multiple d'ordre supérieur p>2, dans la mesure où la structure générale en arbre de type gradin inversé est utilisée pour engendrer une ou plusieurs structures en arbre de type gradin inversé auxiliaire, notamment au niveau des degrés de rang 1 et 2 par exemple, afin de permettre une optimisation de la structure générale précitée. On montre, ainsi qu'il sera décrit ultérieurement dans la description, que la structure générale obtenue telle que représentée en figure 4b est celle d'un arbre de hauteur 7 permettant d'assurer le traitement de 28 opérandes, cette structure atteignant la limite inférieure de Wallace. Ce résultat indique qu'il est possible à partir d'une structure en arbre de type gradin inversé, telle que représentée en figure 2a et 2b par exemple, d'optimaliser localement les degrés 1 et 2, c'est-à-dire les degrés correspondant à la racine et le degré le plus proche de la racine, de façon à optimaliser les paramètres de l'ensemble de la structure générale.

Des études théoriques ont montré que pour des structures en arbre multiple, c'est-à-dire d'arbre d'ordre p>2 tel que représenté en figure 4b, le nombre maximum d'opérandes $N_p(n)$ succeptible d'être traité par un arbre multiple d'ordre p et de hauteur n est donné par la relation récurrente suivante :

$$N_p(n) = N_p(n-1) + N_{p-1}(n-3).$$

Dans la relation précédente, la condition initiale pour un multiplieur cellulaire en arbre de type gradin inversé d'ordre 0 correspond au réseau itératif d'additionneurs ARC. On montre également que les multiplieurs cellulaires en arbre de type gradin inversé d'ordre p nécessitent un temps de traitement proportionnel à $N^{1/(p+1)}$ où p représente l'ordre du multiplieur.

Bien entendu, une optimisation du point de vue de la limite inférieure de Wallace en ce qui concerne le temps de traitement des multiplieurs en gradin de type inversé objets de la présente invention peut être envisagée par la mise en oeuvre de multiplieurs d'ordre p>2 ainsi que décrit précédemment. Cependant, un inconvénient de la généralisation précédente vient du fait que le nombre de connexions inter-couches augmente avec l'ordre du multiplieur en arbre de type gradin inversé précité. Ceci a pour inconvénient bien entendu d'augmenter la perte de surface de circuit intégré susceptible d'être utilisée pour réaliser effectivement l'intégration.

Des études antérieures ont montré que les structures d'arbre ZM sont optimales pour des nombres d'offrandes N faibles, c'est-à-dire N= 3-8,10,11,14 , alors que celles-ci ne requièrent que deux fils de connexion inter-couches.

Conformément à un aspect particulièrement remarquable du multiplieur cellulaire en arbre de type gradin inversé objet de la présente invention, il est avantageux, afin d'optimaliser les degrés de rangs voisins du degré initial comportant la racine R, d'utiliser de tels types de structures en arbre ZM dans les degrés précités, les arbres constituant ramure et première ramure des multiplieurs élémentaires Me1 et Me2 de la figure 4b, étant alors remplacés par des structures en arbre ZM par exemple.

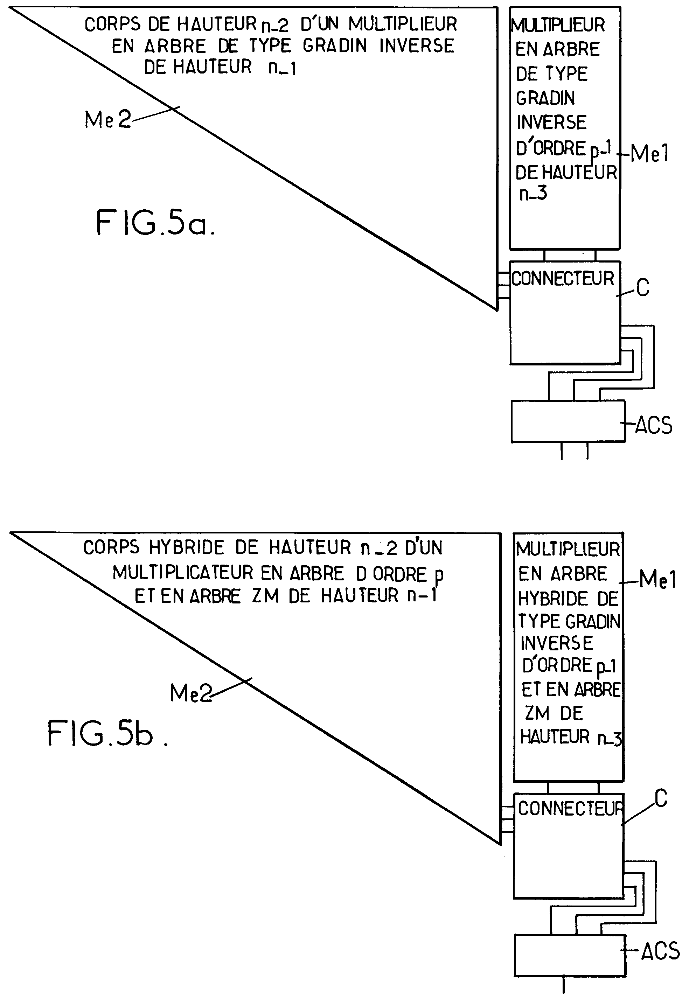

Ainsi qu'on l'a représenté de manière schématique en figure 5a et 5b respectivement, pour la réalisation d'un multiplieur cellulaire d'ordre supérieur p>2, celui-ci peut être réalisé au moyen d'un connecteur C, relié à un additionneur connecteur de sortie ACS formant racine R, et à un multiplieur en arbre de type gradin inversé d'ordre p-1 de hauteur n-3, constituant un multiplieur élémentaire Me1. Le connecteur C est en outre connecté à un corps de multiplieur de hauteur n-2 d'un multiplieur en arbre de type gradin inversé de hauteur n-1 constituant en fait le multiplieur élémentaire Me2.

Pour constituer au contraire un multiplieur cellulaire de type hybride gradin inversé/Zuras Mc Allister de hauteur n et d'ordre p>2, ainsi que représenté en figure 5b, le premier multiplieur cellulaire élémentaire Me1 de degré n-3 est constitué par un multiplieur hybride de type gradin inversé d'ordre p-1 et d'un multiplieur de type Zuras Mc Allister, alors que le deuxième multiplieur cellulaire élémentaire est lui constitué par une structure de type gradin inversé d'ordre p de hauteur n-2 et par un multiplieur de type Zuras Mc Allister.

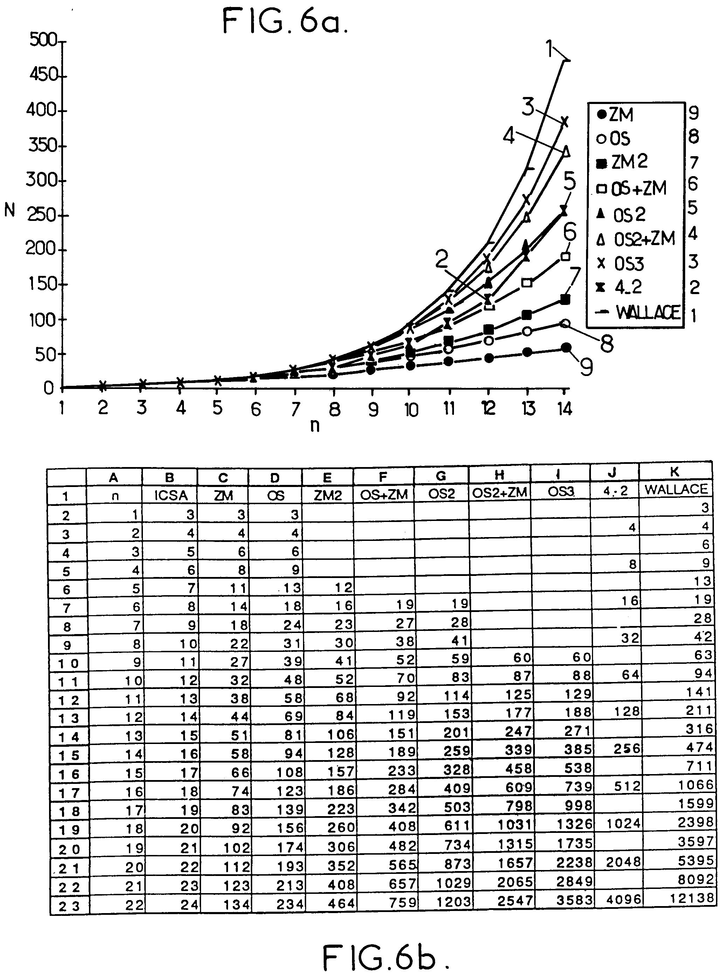

Une étude comparative des propriétés des multiplieurs cellulaires en arbre de type gradin inversé d'ordre p=2 ou d'ordre p plus grand que 2, par rapport au multiplieur théorique de Wallace, et par rapport à des structures de multiplieur en arbre de types connus de l'art antérieur tels que notamment les réseaux itératifs d'additionneurs ARC, les arbres ZM, ou les multiplieurs de type 4-2, sera maintenant décrite en liaison avec les figures 6a, 6b.

Sur la figure 6a on a représenté un diagramme de variation du nombre N d'opérandes susceptible d'être traité par des différents types d'arbres précités en fonction de la hauteur n de ces multiplieurs dans les structures d'arbres précédemment mentionnées. Ainsi, sur la figure 6a ont été successivement représentés :

1) Multiplieur théorique de Wallace,

2) Multiplieur de type 4-2,

3) Multiplieur cellulaire de type gradin inversé d'ordre 3 noté, en référence à la désignation anglo-saxonne "d'overturned stairs" pour gradin inversé OS3,

4) Multiplieur hybride gradin inversé d'ordre 2 OS2 plus arbre ZM, OS2+ZM,

5) Gradin inversé d'ordre 2 OS2,

6) Multiplieur hybride gradin inversé OS plus arbre ZM, OS+ZM,

7) Arbre ZM d'ordre 2, ZM2,

8) Multiplieur cellulaire en arbre de type gradin inversé OS,

9) Multiplieur en arbre ZM.

Sur la figure 6b on a représenté un tableau des valeurs donnant respectivement dans la colonne A la valeur de la hauteur n, puis dans les colonnes B à K respectivement les mêmes valeurs de nombre d'opérandes maximum susceptibles d'être traitées par les structures 1 à 9 déjà désignées en figure 6a. Les valeurs contenues dans la colonne à gauche de la colonne A sont les valeurs de la hauteur du multiplieur, compte tenu de la racine R.

De l'observation des figures 6a et 6b on peut déduire que les structures en arbre ZM atteignent la limite de Wallace et sont donc aussi performantes que les structures de Wallace pour des nombres d'opérandes N compris inclusivement entre 3 et 8, 10-11 et pour N=14 en terme de hauteur nécessaire correspondante des arbres. On constate également que les structures en arbre ZM sont cependant très éloignées de la structure théorique de Wallace pour les valeurs supérieures de N.

De même, en ce qui concerne le multiplieur cellulaire en arbre de type gradin inversé tel que représenté en figure 2b par exemple, objet de la présente invention, celui-ci permettant de réaliser une sommation S (18,2), la hauteur de la structure en arbre correspondante est égale à 6, cette hauteur étant égale à celle d'un arbre de Wallace théorique idéal permettant d'assurer une sommation de type S(19,2), alors qu'une structure en arbre ZM nécessite, pour réaliser une sommation S (18,2), une hauteur n=7. On conclut ainsi que la structure en arbre de type gradin inversé objet de la présente invention, permettant de réaliser une sommation S (18,2) est plus proche de la limite inférieure de Wallace que la structure équivalente en arbre ZM. Cette constatation est également vraie pour les autres valeurs de N.

En outre, l'étude de la figure 6b montre que les multiplieurs cellulaires en arbre de type gradin inversé, objets de la présente invention atteignent la limite inférieure de Wallace pour N compris entre 3 et 18, 20 et 24, et 29 et 31.

Par contre l'observation de la même figure 6b montre que les multiplieurs en arbre de type gradin inversé, objet de la présente invention n'atteignent pas l'optimum par rapport à la limite inférieure de Wallace pour les valeurs de N telles N=19, 25<N<28, N>32.

En ce qui concerne les multiplieurs cellulaires en arbre de type hybride OS+ZM, l'observation de la figure 6b montre également que ces structures atteignent la limite inférieure de Wallace pour un nombre d'opérandes N tel que :
N=19, 25<N<27, 29<N<38, 43<N<52, 64<N<70.

On notera en outre, que les structures précitées, par rapport aux structures de type arbre ZM de l'art antérieur, nécessitent seulement un fil de connection inter-couches en plus que les structures en arbre ZM précitées.

En ce qui concerne la mise en oeuvre des multiplieurs cellulaires en arbre de type gradin inversé, objets de la présente invention, tels que décrit précédemment dans la description, celle-ci peut être réalisée par intégration sur un substrat de silicium par exemple. Le processus d'intégration peut alors être facilité et optimisé par le choix de la structure la plus appropriée, structure en arbre simple de type gradin inversé ou structure hybride, le choix de ces structures étant dicté, d'une part, en fonction de l'optimisation de la structure vis-à-vis de la limite inférieure de Wallace ainsi que décrit précédemment en liaison avec les figures 6a et 6b, et, d'autre part, en liaison avec le gain en nombre de fils de connexion inter-couches pour chaque structure, ainsi qu'il sera décrit en liaison avec les tableaux 1 et 2 joints en annexe de la présente description.

Sur le tableau 1 on a porté dans la première colonne les différentes structures telles que déjà mentionnées sur la figure 6b dans les colonnes B à K, dans la colonne 2 on a représenté le nombre de fils de connexion inter-couches désigné par TLW, en colonne 3 le temps de sommation ou de traitement ST, et en colonne 4 le nombre N d'opérandes susceptibles d'être traités en fonction de la hauteur n de l'arbre.

Le tableau 2 de l'annexe précitée indique la nombre de fils de connexion inter-couches TLW nécessaire dans un multiplieur cellulaire de type N,2 optimal utilisant des structures en arbre de transparence constante. On rapelle que la transparence désigne pour une structure en arbre déterminée, le nombre minimum de fils de connexion inter-couches nécessaire pour chaque degré constitutif de la structure précitée. On remarquera que le nombre porté entre parenthèses sur la colonne TLW du tableau 2 indique les différences de hauteur entre les structures précitées et les structures en arbre de Wallace théoriques.

Afin de réaliser un multiplieur cellulaire en arbre sous forme de circuit intégré, un procédé conforme à l'objet de la présente invention peut consister à établir un multiplieur cellulaire en arbre en tranches de bits selon une topologie verticale ainsi que représentée en figure 3c, pour constituer un ou plusieurs degrés d'un multiplieur cellulaire au niveau bits, puis à répter l'opération précitée en nombre de fois correspondant au nombre de bits constitutifs d'un mot, représentatif d'un opérande à multiplier pour constituer un ou plusieurs degrés d'un multiplieur cellulaire au niveau mot. En référence à la figure 3a, l'opération précitée peut être réalisée dans une des directions de la surface de la puce constituant le circuit intégré, par exemple la dimension Y.

Ensuite, le procédé objet de la présente invention consiste à établir un arrangement des degrés d'un multiplieur cellulaire au niveau mot selon une topologie horizontale, la dimension X par exemple selon la figure 3a pour constituer un multiplieur cellulaire en arbre de type gradin inversé.

Bien entendu, la mise en oeuvre du procédé précité peut être optimisée par le choix de la structure réelle en arbre simple ou en arbre hybride ainsi que mentionné précédemment. Le nombre minimum de fils de connexion inter-couches peut alors être choisi en référence au tableau 2 joint en annexe, pour les valeurs de nombre d'opérandes N<129, les hauteurs d'arbres correspondantes étant ainsi minimales. On notera que par ce choix, les multiplieurs cellulaires en arbre et leurs variantes hybrides mises en oeuvre conformément au procédé, objet de l'invention, sont alors aussi performantes que les arbres de Wallace théoriques correspondants. Bien que les arbres ainsi mis en oeuvre ne puissent prétendre atteindre la limite inférieure de Wallace pour N=42,61 à 63,89 à 94 ainsi qu'il résulte de l'observation du tableau 2, la distance minimum est indiquée pour les cas précités. Les arbres de structure en arbre de type gradin inversé, objet de la présente invention constituent alors les meilleurs approximations des structures théoriques de Wallace parmi les solutions disponibles.

On notera enfin que les multiplieurs cellulaires en arbre objet de la présente invention, de type gradin inversé, peuvent être utilisés pour la mise en oeuvre d'additionneurs multiopérandes.

On a ainsi décrit un multiplieur cellulaire en arbre de type gradin inversé et son procédé de mise en oeuvre, lesquels permettent d'atteindre dans la majorité des cas des configurations optimales proches des structures correspondantes théoriques dites en arbre de Wallace. On notera en outre que les structures en arbre de type gradin inversé, objet de la présente invention nécessitent des configurations d'inter-connexions inter-couches simples et régulières, lesquelles peuvent être optimisées de façon à rendre la structure résultante équivalente aux structures en arbre de Wallace dans les cas les plus usuels.

## Table 1

|        | TLW            | ST                   | N                                              |
|--------|----------------|----------------------|------------------------------------------------|
| ICSA   | O              | $O(N)$               | $n+2$                                           |
| ZM     | 2              | $O(2N^{1/2})$        | $n^2/4+n/2+[17-(-1)^n]/8$                       |
| OS     | 3              | $O((2N)^{1/2})$      | $n^2/2-n/2+3$                                   |
| ZM2    | 4              | $O(2(3N)^{1/3})$     | $n^3/24+[43-3(-1)^n]n/48+2$                     |
| OS+ZM  | 5              | $O((12N)^{1/3})$     | $n^3/12-3n^2/8+29n/12-[1-(-1)^n]/16$            |
| OS2    | 6              | $O((6N)^{1/3})$      | $n^3/6-3n^2/2+22n/3-7$                          |
| OS2+ZM | 8              | $O(2(3N)^{1/4})$     | $n^4/48-n^3/3+35n^2/12-29n/3+17+[1-(-1)^n]/32$  |
| OS3    | 9              | $O((24N)^{1/4})$     | $n^4/24-11n^3/12+215n^2/24-445n/12+63$          |
| 4-2    | $2(\log_2 N-2)$ | $O(2\log_2 N)$      | $2^{n/2}+1$                                     |
| Wallace | ?             | $O(\log_{3/2} N)$    | $2(3/2)^{n-1}<N<2(3/2)^n$                       |

## Table 2

| N      | TLW | N       | TLW    |
|--------|-----|---------|--------|
| 3-4    | O   | 42      | 6(+1)  |
| 5-8    | 2   | 43-52   | 5      |
| 9      | 3   | 53-59   | 6      |
| 10-11  | 2   | 60      | 8      |
| 12-13  | 3   | 61-63   | 5(+1)  |
| 14     | 2   | 64-70   | 5      |
| 15-18  | 3   | 71-83   | 6      |
| 19     | 5   | 84-87   | 8      |
| 20-24  | 3   | 88      | 9      |
| 25-27  | 5   | 89-92   | 5(+1)  |
| 28     | 6   | 93-94   | 6(+1)  |
| 29-31  | 3   | 95-114  | 6      |
| 32-38  | 5   | 115-125 | 8      |
| 39-41  | 6   | 126-129 | 9      |

**Revendications**

1. Multiplieur cellulaire en arbre de type gradin inversé, comportant une pluralité d'additionneurs à retenue conservée interconnectés, caractérisé en ce que, pour constituer un multiplieur d'ordre p et de hauteur n+1 celui-ci est formé par :
   – une racine (R) constituée par un additionneur à retenue conservée,
   – un corps de multiplieur CO(p,n) d'ordre p et de hauteur n où p désigne un paramètre de temps de traitement de sommation de la forme $N^{1/(p+1)}$,N désignant le nombre d'opérandes à traiter, ledit corps étant formé par :
      . un opérateur connecteur à cinq entrées de rang q, noté C(n,q), l'opérateur connecteur de rang 1 C(n,1) étant interconnecté à ladite racine R, ledit opérateur connecteur C(n,q) comportant un premier et un deuxième additionneur à retenue conservée connectés en cascade, le premier et le deuxième additionneur à retenue conservée comportant chacun trois entrées, une sortie somme et une sortie retenue, la sortie retenue dudit premier additionneur étant connectée à une entrée dudit deuxième additionneur, l'opérateur connecteur C(n,q) comportant trois sorties constituées par la sortie somme du premier additionneur, la sortie somme et la sortie retenue du deuxième additionneur,
      . un arbre d'ordre p-1 et de hauteur n-2 constitué par un agencement d'additionneurs à retenue conservée interconnectés, les sorties somme et retenue de l'additionneur à retenue conservée constituant racine (r) de cet arbre étant respectivement connectées à une entrée du premier additionneur dudit opérateur connecteur C(n,q),
      . un corps de multiplieur CO(p,n-1) d'ordre p et de hauteur inférieure (n-1), ledit corps de multiplieur étant formé de manière analogue au corps de multiplieur de hauteur supérieure n, et connecté audit opérateur connecteur C(n,q).

2. Multiplieur selon la revendication 1, caractérisé en ce que lesdits additionneurs sont agencés en degrés de hauteur n et de rang q, chaque degré Dq étant formé, pour q < Q-2 où Q désigne le rang maximum des degrés, par :
   – une branche Bq constituée par une pluralité de n-2 additionneurs successifs,
   – un opérateur connecteur Cq à cinq entrées comportant un premier et un deuxième additionneur connectés en cascade, ledit opérateur connecteur Cq étant interconnecté, d'une part, à ladite branche Bq pour former ledit degré Dq de hauteur n, où n représente le nombre d'additionneurs de ce degré, et, d'autre part à l'opérateur connecteur Cq+1 de rang supérieur de façon à former, pour le sous-ensemble constitué par les Q-q degrés de rang supérieur, un corps de multiplieur cellulaire en arbre de structure arborescente correspondante, les degrés de rang Q-1 et Q étant respectivement constitués par un connecteur et par un additionneur, ledit multiplieur comportant en outre :
   – un additionneur de sortie ARC, l'opérateur connecteur de rang 1, C1, étant interconnecté audit additionneur de sortie ARC.

3. Multiplieur selon la revendication 2, caractérisé en ce que chaque branche Bq de rang q comportant n-2 additionneurs successifs , comprend n entrées d'opérandes.

4. Multiplieur selon la revendication 3, caractérisé en ce que les sorties de somme et de retenue d'un additionneur h de chaque branche Bq sont reliées aux entrées correspondantes de l'additionneur h+1 successif suivant.

5. Multiplieur selon l'une des revendications 3 ou 4 , caractérisé en ce que chaque opérateur connecteur Cq d'ordre q tel que 1 < q < Q-2 est tel que :
   – les trois entrées d'opérande du premier additionneur Cq,1 sont respectivement reliées à la sortie somme , à la sortie retenue du dernier additionneur constituant la branche Bq correspondante et à la sortie somme du premier additionneur C(q+1),1 de l'opérateur connecteur de rang supérieur Cq+1 ,
   – la sortie retenue et la sortie somme du premier additionneur sont respectivement reliées à une entrée opérande du deuxième additionneur et à une entrée opérande du premier additionneur C(q-1),1 de l'opérateur connecteur Cq-1 de rang inférieur q-1 ,
   – deux entrées offrande du deuxième additionneur Cq,2 sont respectivement reliées à la sortie somme et à la sortie retenue du deuxième additionneur C(q+1),2 de l'opérateur connecteur Cq+1 de rang supérieur q+1.

6. Multiplieur selon l'une des revendications précédentes, caractérisé en ce que lesdits additionneurs sont disposés selon une topologie plane et verticale.

7. Multiplieur selon l'une des revendications précédentes, caractérisé en ce que, en vue de constituer un multiplieur cellulaire en arbre de type gradin inversé de hauteur n=7 et d'ordre 1 à 24 opérandes celui-ci comporte :
   – un premier degré (D1) formé par d'une part, un opérateur connecteur C dont les trois sorties sont reliées à la racine R, et, d'autre part, un arbre formant une branche B constituée par quatre additionneurs ARC en cascade, l'additionneur ARC formant racine r dudit arbre étant connecté aux trois bornes d'entrée du premier additionneur ARC constitutif dudit opérateur connecteur C,
   – un corps de multiplieur CO formant multiplieur élémentaire de type gradin inversé formé par cinq degrés successifs D2 à D6, l'opérateur connecteur C2 du degré D2 étant interconnecté aux deux entrées du deuxième additionneur ARC constitutif dudit opérateur conecteur C.

8. Multiplieur selon la revendication 7, caractérisé en ce que, en vue de constituer un multiplieur cellulaire de hauteur n d'ordre p > 2, lesdits degrés de rang 1 et 2 sont remplacés par un premier multiplieur cellulaire élémentaire (Me1) de hauteur n-3 et d'ordre p-1, lesdits degrés de rang q > 3 étant arrangés de façon à constituer un deuxième multiplieur cellulaire élémentaire (Me2) de hauteur n-2 et d'ordre p, les premier et deuxième multiplieur élémentaire étant interconnectés à un connecteur (C).

9. Multiplieur selon la revendication 8, caractérisé en ce que, en vue de constituer un multiplieur cellulaire de hauteur 7 et d'ordre 2 à 28 opérandes, ledit premier multiplieur élémentaire comprend une ramure comportant :
   – un opérateur connecteur (Ce11) et un additionneur de sortie (ACS1) connecté à cet opérateur connecteur, ladite ramure comportant,
      . une première sous-ramure formée par une branche Be1 connectée à cet opérateur connecteur,
      . une deuxième sous-ramure formée par un opérateur connecteur (Ce12) connecté à l'opérateur connecteur (Ce11) de ladite ramure,
      . une troisième sous-ramure formée par une branche (Be3) connectée audit opérateur connecteur (Ce12) de ladite deuxième sous-ramure, ledit additionneur de sortie (ACS1) étant connecté audit opérateur connecteur (C) pour former le degré de rang 1 pour le multiplieur.

10. Multiplieur selon la revendication 8 ou 9, caractérisé en ce que, en vue de constituer ledit multiplieur cellulaire de hauteur 7 d'ordre 2 à 28 opérandes, ledit deuxième multiplieur élémentaire comprend un opérateur connecteur (Ce21), ledit deuxième multiplieur élémentaire (Me2) comportant en outre :
   – une première ramure comportant une première et une deuxième sous-ramure, ladite première sous-ramure étant formée par un opérateur connecteur (Ce211) et par un additionneur de sortie (ACS2) connecté d'une part à l'opérateur connecteur (Ce21) du deuxième multiplieur élémentaire (Me2) et à l'opérateur connecteur (Ce211) de ladite première sous-ramure, ladite deuxième sous-ramure étant formée par une branche (be22) connectée audit opérateur connecteur (Ce211) de ladite première sous-ramure,
   – une deuxième ramure formée par quatre degrés de rang Q, Q-1, Q-2, Q-3 selon la revendication 1.

11. Multiplieur selon l'une des revendications 8 à 10 précédentes, caractérisé en ce qu'en vue de réaliser un multiplieur cellulaire de type hybride gradin-inversé/Zuras-Mᶜ Allister de hauteur n d'ordre p > 2 ledit premier multiplieur cellulaire élémentaire de degré n-3 est constitué par un multiplieur de type gradin inversé d'ordre p-1 et d'un multiplieur de type Zuras-Mᶜ Allister, ledit deuxième multiplieur cellulaire élémentaire, étant constitué par un multiplieur de type gradin-inversé, d'ordre p, de hauteur n-2, et par un multiplieur de type Zuras-Mᶜ Allister.

12. Procédé de mise en oeuvre d'un multiplieur cellulaire en arbre formé par une pluralité d'additionneurs à retenue conservée interconnectés, caractérisé en ce que ledit procédé consiste :
   – a) à établir un multiplieur cellulaire en arbre en tranches de bits selon une topologie verticale, pour constituer un ou plusieurs degrés d'un multiplieur cellulaire au niveau bit,
   – b) à répéter l'opération a) un nombre de fois correspondant à un nombre de bits constitutif d'un mot représentatif d'un opérande à multiplier pour constituer un ou plusieurs degrés d'un multiplieur cellulaire au niveau mot,
   – c) à établir un arrangement desdits degrés d'un multiplieur cellulaire au niveau mot selon une topologie horizontale pour constituer un multiplieur cellulaire en arbre de type gradin-inversé.

13. Utilisation d'un multiplieur cellulaire en arbre de type gradin inversé, selon l'une des revendications 1 à 11, pour la mise en oeuvre d'un additionneur multiopérandes.

ART ANTERIEUR

**FIG.1.**

**FIG.2b.**

FIG.2a.

FIG. 2c.

FIG.3a.

# FIG.3b.

# FIG.3c.

FIG.4a.

FIG.4b.

CORPS DE HAUTEUR n-2 D'UN MULTIPLIEUR
EN ARBRE DE TYPE GRADIN INVERSE
DE HAUTEUR n-1

Me2

FIG.5a.

MULTIPLIEUR
EN ARBRE
DE TYPE
GRADIN
INVERSE
D'ORDRE p-1 ─Me1
DE HAUTEUR
n-3

CONNECTEUR ─C

─ACS

CORPS HYBRIDE DE HAUTEUR n-2 D'UN
MULTIPLICATEUR EN ARBRE D'ORDRE p
ET EN ARBRE ZM DE HAUTEUR n-1

Me2

FIG.5b.

MULTIPLIEUR
EN ARBRE ─Me1
HYBRIDE DE
TYPE GRADIN
INVERSE
D'ORDRE p-1
ET EN ARBRE
ZM DE
HAUTEUR n-3

CONNECTEUR ─C

─ACS

23

# FIG. 6a.

FIG. 6a.

| | A | B | C | D | E | F | G | H | I | J | K |
|---|---|---|---|---|---|---|---|---|---|---|---|
| 1 | n | ICSA | ZM | OS | ZM2 | OS+ZM | OS2 | OS2+ZM | OS3 | 4.2 | WALLACE |
| 2 | 1 | 3 | 3 | 3 | | | | | | | 3 |
| 3 | 2 | 4 | 4 | 4 | | | | | | 4 | 4 |
| 4 | 3 | 5 | 6 | 6 | | | | | | | 6 |
| 5 | 4 | 6 | 8 | 9 | | | | | | 8 | 9 |
| 6 | 5 | 7 | 11 | 13 | 12 | | | | | | 13 |
| 7 | 6 | 8 | 14 | 18 | 16 | 19 | 19 | | | 16 | 19 |
| 8 | 7 | 9 | 18 | 24 | 23 | 27 | 28 | | | | 28 |
| 9 | 8 | 10 | 22 | 31 | 30 | 38 | 41 | | | 32 | 42 |
| 10 | 9 | 11 | 27 | 39 | 41 | 52 | 59 | 60 | 60 | | 63 |
| 11 | 10 | 12 | 32 | 48 | 52 | 70 | 83 | 87 | 88 | 64 | 94 |
| 12 | 11 | 13 | 38 | 58 | 68 | 92 | 114 | 125 | 129 | | 141 |
| 13 | 12 | 14 | 44 | 69 | 84 | 119 | 153 | 177 | 188 | 128 | 211 |
| 14 | 13 | 15 | 51 | 81 | 106 | 151 | 201 | 247 | 271 | | 316 |
| 15 | 14 | 16 | 58 | 94 | 128 | 189 | 259 | 339 | 385 | 256 | 474 |
| 16 | 15 | 17 | 66 | 108 | 157 | 233 | 328 | 458 | 538 | | 711 |
| 17 | 16 | 18 | 74 | 123 | 186 | 284 | 409 | 609 | 739 | 512 | 1066 |
| 18 | 17 | 19 | 83 | 139 | 223 | 342 | 503 | 798 | 998 | | 1599 |
| 19 | 18 | 20 | 92 | 156 | 260 | 408 | 611 | 1031 | 1326 | 1024 | 2398 |
| 20 | 19 | 21 | 102 | 174 | 306 | 482 | 734 | 1315 | 1735 | | 3597 |
| 21 | 20 | 22 | 112 | 193 | 352 | 565 | 873 | 1657 | 2238 | 2048 | 5395 |
| 22 | 21 | 23 | 123 | 213 | 408 | 657 | 1029 | 2065 | 2849 | | 8092 |
| 23 | 22 | 24 | 134 | 234 | 464 | 759 | 1203 | 2547 | 3583 | 4096 | 12138 |

# FIG. 6b.

EP 0 472 447 A1

Office européen
des brevets

**RAPPORT DE RECHERCHE EUROPEENNE**

Numero de la demande

EP    91 40 2087

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | IEEE JOURNAL OF SOLID STATE CIRCUITS vol. SC-21, no. 5, Octobre 1986, pages 814 - 819; D. ZURAS ET AL.: 'Balanced delay trees and combinatorial division in VLSI' * page 818, colonne 1, ligne 1 - ligne 10; figures 9,DROITE * | 1 | G06F7/52 |
| D,A | EP-A-0 332 504 (ETAT FRANCAIS) * abrégé * | 1 | |

DOMAINES TECHNIQUES RECHERCHES (Int. Cl.5)

G06F

Le présent rapport a été établi pour toutes les revendications

| Lieu de la recherche | Date d'achèvement de la recherche | Examinateur |
|---|---|---|
| LA HAYE | 20 NOVEMBRE 1991 | COHEN B. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

25